# EUROPEAN PATENT APPLICATION

(11) **EP 2 608 297 A1**
(43) Date of publication of application: **26.06.2013**
(21) Application number: 11195409.5
(22) Date of filing: 22.12.2011
(51) Int. Cl.: H01M 4/90, H01M 4/92, C25B 11/04

(54) **Precious metal oxide catalyst for water electrolysis**

(71) Applicant: Umicore AG & Co. KG, 63457 Hanau-Wolfgang (DE)
(72) Inventor: Klose-Schubert, Barbara, 60596 Frankfurt am Main (DE); Herein, Daniel, 60487 Frankfurt am Main (DE); Reitz, Hans-Georg, 63589 Linsengericht (DE)

(57) **Abstract**

The invention is directed to precious metal oxide catalysts, particularly to iridium oxide based catalysts for use as anode catalysts in PEM water electrolysis and other applications. The composite catalyst materials comprise iridium oxide (IrO₂) and optionally ruthenium oxide (RuO₂) in combination with an inorganic oxide (for example TiO₂, Al₂O₃, ZrO₂ and mixtures thereof). The inorganic oxide has a BET surface area in the range of 30 to 200 m²/g and is present in a quantity of 25 to 70 wt.-% based on the total weight of the catalyst.

The catalyst materials are characterised by a good electrical conductivity > 0.01 S/cm and high current density.

The catalysts are used in electrodes, catalyst-coated membranes and membrane-electrode-assemblies for PEM electrolyzers, PEM fuel cells, regenerative fuel cells (RFC), sensors and other electrochemical devices.

## Description

### Field of the Invention

The present invention is directed to precious metal oxide catalysts, particularly to iridium oxide based catalysts for PEM fuel cells, water electrolysis, regenerative fuel cells (RFC) or oxygen generating electrodes in various electrolysis applications. Furthermore, the use of these catalyst materials in electrodes, catalyst-coated membranes (CCMs) and membrane-electrode-assemblies (MEAs) for fuel cells and water electrolyzers is disclosed.

### Background of the invention

Hydrogen will become a major energy carrier in a future energy regime based on renewable resources. Fuel cells will gain more and more importance for alternative mobile, stationary and portable applications.

Water electrolysis is the most practical way to produce hydrogen using renewable resources. Investment and production costs of electrolysers define the total economy of the system and will determine whether this is to become a feasible process for hydrogen production. The production cost of hydrogen by water electrolysis is, to a large extent, affected by the electric power consumption, which can be about 70 % of the total production costs of hydrogen.

Two different types of water electrolysers are commonly used in the state of the art: Alkaline electrolysers and PEM water electrolysers. Water electrolysers using a polymer electrolyte membrane ("PEM") along with precious metal catalysts are able to operate at considerably higher current densities and at lower specific energy consumption compared to conventional alkaline electrolysers giving the advantage of higher utilisation of the equipment and reduced production costs. In the best PEM electrolysers, a cell voltage of 1.67 V at 3 A/cm² has been obtained. This cell voltage is comparable to that of a modern alkaline electrolyser which typically is operating at 0.2 A/cm². This means that the alkaline electrolyser needs 15 times larger active area to produce the same amount of hydrogen at the same electrical power consumption compared to a PEM electrolyser system.

The present invention is therefore directed to improvements of catalysts for PEM water electrolysers and PEM fuel cells.

In principle, PEM water electrolysers are built up similar to a PEM fuel cell, however, they are working in a different manner. During PEM fuel cell operation, oxygen reduction takes place at the cathode and hydrogen oxidation occurs at the anode of the fuel cell. In summary, water and electrical current is produced. In a PEM water electrolyser, the current flow and the electrodes are reversed and water decomposition takes place. Oxygen evolution occurs at the anode (abbreviated "OER" = oxygen evolution reaction) and reduction of protons (H+), which travel through the polymer electrolyte membrane, takes place at the cathode (abbreviated "HER" = hydrogen evolution reaction). As a result, water is decomposed into hydrogen and oxygen by means of current. The reactions can be summarized in the following equations:

2 H₂O => O₂ + 4H++ 4e- (OER)

4 H+ 4 e- => 2 H₂ (HER)

The PEM water electrolyser generally comprises a polymer electrolyte membrane (for example Nafion® by DuPont), which is sandwiched between a pair of electrode layers and a pair of porous current collectors (or gas diffusion layers) mounted respectively on both sides of the electrode layers.

In PEM fuel cell electrodes, platinum on carbon catalysts are used for both, the anode electrocatalyst (for hydrogen oxidation) and the cathode electrocatalyst (for oxygen reduction). In the PEM electrolyser, carbon based materials such as Pt/carbon catalysts and carbon-fiber based gas diffusion layers (GDLs) cannot be used at the anode side because of corrosion of carbon by the oxygen evolved during water electrolysis.

For the manufacture of a membrane-electrode-assembly for a PEM electrolyser, catalyst inks comprising catalyst powders, solvents and optionally polymer electrolyte (i.e. "ionomer") material is prepared and applied either directly to the membrane or to the gas diffusion layer and then contacted with the membrane. The manufacture of this assembly is similar to the manufacture of membrane-electrode-assemblies (MEAs) for PEM fuel cells, which is broadly described in the literature (see for example US 5,861,222, US 6,309,772 and US 6,500,217).

Among all precious metals, platinum is the most active catalyst for the hydrogen evolution reaction (HER) at the cathode and can be applied at moderate loading. Iridium and iridium oxide is well known for its unique electrocatalytic properties in respect to chlorine and oxygen evolution processes (ref to DEGUSSA-Edelmetalltaschenbuch, Chapter 8.3.3, Huethig-Verlag, Heidelberg/Germany, 1995). Thus, iridium is the preferred material for the oxygen evolution reaction (OER) at the anode side, either in the form of pure metal or as oxide. However, for certain purposes, other precious metal oxides (preferably oxides of ruthenium or platinum) may be added.

In PEM water electrolysers, the precious metal catalyst loading on the anode and on the cathode is still relatively high, 3-5 mg p.m./cm² or more. Therefore there is a need for the development of improved catalysts with lower oxygen overvoltage and longer service life, which allows reducing the catalyst loading of the electrolysers.

### Description of related art

GB 1 195 871 describes the use of thermally treated RuO₂ and IrO₂ compounds and their mixtures in activated titanium electrodes (so-called "DSA"® = dimensionally stable anodes). The products are widely used for chlorine production in the chlor-alkali electrolysis. The ruthenium and iridium oxides are deposited by a thermal decomposition process of liquid precursors onto an electrically conductive titanium metal substrate.

The deposition method by thermal treatment is not suitable for membrane-based PEM electrolysers because of the low thermal stability of the polymer electrolyte membrane. Furthermore, the liquid precursors would penetrate the membrane and con-taminate the ionomer material. Furthermore, the addition of TiO₂ and various other inorganic oxides occurs "in-situ", i.e. before the formation of the precious metal oxide layer, a specific catalyst in powder form is not disclosed.

IrO₂/Pt electrocatalysts are reported by T. Ioroi et al [J. of Appl. Electrochemistry 31, 1179-1183 (2001) and J. of Electrochem. Soc. 147(6), 2018-2022 (2000)]. These catalysts were prepared in powder form by alkaline precipitation and subsequent thermal treatment. They do not contain any additional inorganic oxides.

US 2003/0057088 A1 is directed towards a PEM water electrolyser cell using an Ir-Ru oxide anode catalyst comprising at least one metal oxide selected from the group of iron (Fe), nickel (Ni) and cobalt (Co). These catalysts are to provide low oxidation overvoltages.

JP10-273791 describes the preparation of IrO₂, RuO₂ and mixed IrO₂/RuO₂ catalysts for water electrolysis by hydroxide coprecipitation. Heat treatment is performed at 500°C for 2 hours. This method was reproduced by the present inventors and it was found that the catalysts obtained according to this method comprise very coarse and agglomerated particles. As a result, the BET surface area of these catalysts is very low and their electrochemical activity is insufficient. Furthermore, the processing of these materials into catalyst inks as well as any subsequent coating and printing steps with such inks are very difficult.

EP1701790B1 discloses precious metal based oxide catalysts for water electrolysis, comprising iridium oxide and a high surface area inorganic oxide, wherein the inorganic oxide is present in a quantity of less that 20 wt.-% based on the total weight of the catalyst. If the amount of inorganic oxide is higher than 20 wt.-%, the electrical conductivity of the catalyst and the electrode is impaired. Because of that, these catalysts still contain a high amount of precious metal oxide. Therefore they are expensive and do not allow a very low precious metal loading in the respective electrodes. Thus, when using the catalysts disclosed in EP 1701790B1, the precious metal consumption is still relatively high, leading to high costs of the electrode products.

### Summary of the invention

It was an object of the present invention to provide improved precious metal oxide, particularly iridium oxide, based catalysts, which are suitable for use in PEM water electrolysis, reveal a high current density and enable very low precious metal loadings and should show sufficiently high electrical conductivity when applied in electrodes. Further, they should have a long lifetime and should provide a high endurance of the PEM electrolyser unit.

The new catalysts should allow significantly reduced precious metal loadings and thus should enable the production of electrodes and catalyst-coated membranes with very low precious metal content.

To achieve the above-cited objects, improved iridium oxide based catalysts as defined in the claims of the present invention are provided.

The claimed catalysts are composite catalyst materials and comprise of iridium oxide (IrO₂ and/or Ir₂O₃) and optionally ruthenium oxide (RuO₂ and/or Ru₂O₃) in combination with a high surface area inorganic oxide (preferably TiO₂, Al₂O₃, ZrO₂ and mixtures thereof). The iridium oxide of the present invention comprises predominantly of iridium-(IV)-oxide (IrO₂), however, various amounts of iridium-(III)-oxide (Ir₂O₃) may be present. The term "composite catalyst" means that the catalyst contains the iridium oxide particles finely deposited on or dispersed around the inorganic oxide material. The claimed materials can be used as anode catalysts in PEM electrolysers. In this application field, they reveal a high current density and lead to a lower specific energy consumption per volume of hydrogen produced. Thus they offer higher hydrogen production rates at a given cell voltage. In summary, they can electrolyse water at a lower voltage than conventional iridium oxide based catalysts, which do not contain the inorganic oxide. The catalyst-coated membranes ("CCMs") and membrane-electrode-assemblies ("MEAs") for PEM water electrolysers manufactured by use of the claimed precious metal oxide catalysts show improved performance vs. the state of the art materials. As a consequence, smaller and cheaper electrolyser systems can be designed with less consumption of extensive materials, such as ionomer membranes, precious metals and bipolar plates.

However, other fields of application, such as in PEM fuel cells (for example for improvement of start up/shut down characteristics), in regenerative fuel cells (RFC) and in electrochemical sensors are possible.

### Detailed description of the invention

The present invention is directed to precious metal oxide catalysts comprising iridium oxide and optionally ruthenium oxide and a high surface area inorganic oxide. If RuO₂ is present, the atomic ratio of Ru / Ir is in the range of 4/1 to 1/4, preferably about 1/1.

The iridium oxide of the present invention comprises predominantly of iridium(IV)-oxide (IrO₂), however, depending on the manufacturing process, various amounts of iridium(III)-oxide (Ir₂O₃) may be present. The ruthenium oxide may be present as ruthenium(IV)-oxide, but ruthenium(III)-oxide may also be present in minor amounts. Generally, IrO₂ and RuO₂ are electrically conductive oxide materials. Contrary to EP1701790B1, it was found by the present inventors that the amount of the high surface area inorganic oxide may exceed the range of 20 wt.-%. It can be extended to a range of 25 to 70 wt.-%, based on the total weight of the catalyst.

It was surprisingly found that, under the provision that the specific surface area (BET) of the inorganic oxide employed is limited to a specific range, the electrical conductivity of the resulting catalyst material is at a value >0.01 S/cm (as detected by powder measurements). This value is sufficient for the application as catalyst for anode electrodes in MEAs for water electrolysis and several other applications. As a result, the high surface area inorganic oxide is added in a quantity in the range of 25 to 70 wt.-%, preferably in a range of 30 wt.-% to 60 wt.-%, based on the total weight of the catalyst. To achieve best results, it was found that the BET surface area of the inorganic oxide should be limited to the range of 30 to 200 m²/g, preferably to the range of 30 to 150 m²/g. Generally, the BET surface area is measured according to DIN 66132.

Thus, in summary, the present invention is directed to a catalyst for water electrolysis, comprising iridium oxide and a high surface area inorganic oxide, having a BET surface area in the range of 30 to 200 m²/g, wherein the inorganic oxide is present in a quantity in the range of 25 to 70 wt.-% based on the total weight of the catalyst and wherein the electrical conductivity of the catalyst (as detected by powder measurements) is >0.01 S/cm, preferably >0.1 S/cm.

When applying an inorganic oxide with the specific surface area in the range given above, the electrical conductivity of the resulting catalyst material is in an acceptable range, suitable for the production of electrodes with sufficiently high performance. Typically, the electrical conductivity of the resulting composite precious metal oxide catalyst is >0.01 S/cm. As a result, the electrochemical activity (detected as current density [A/mg] at 1.5 V vs. RHE) is generally in a range of 1 to 100 mA/mg, preferably in a range of 1 to 50 mA/mg.

The inorganic oxides should be powdery materials, should be inert and should have a very low solubility in water and in acidic environment. This is important for a long lifetime and high endurance of the PEM electrolyzer unit.

Suitable inorganic oxides are pyrogenic ("fumed") oxides such as TiO₂, SiO₂ or Al₂O₃, manufactured by Evonik-Degussa GmbH, Duesseldorf. However, other high surface area inorganic oxides can be used. The preferred Al₂O₃ material is Puralox, manufactured by Sasol Germany GmbH (Brunsbuettel, Germany), the preferred TiO₂ material is TiO₂ P25, produced by Evonik-Degussa GmbH, Duesseldorf. Other examples for suitable high surface area inorganic oxides are Nb₂O₅, SnO₂, F-doped tin oxide (SnO₂/F), zirconia (ZrO₂), ceria doped zirconia (CeO₂/ZrO₂) and mixtures and combinations thereof.

In a typical preparation process, the inorganic oxide is thoroughly dispersed in an aqueous solution. Then the iridium precursor compound (hexachloroiridium (IV) acid, Ir(III)-chloride or Ir-nitrate etc.) is added. The suspension is then heated to 70-100°C and IrO₂ is subsequently precipitated by controlled addition of alkali to adjust the pH in a range of 6 to 10. After filtration and washing, the catalyst is dried and calcined. The resulting catalyst is very active, has a high surface area, a very low degree of agglomeration and can be easily dispersed in a catalyst ink for subsequent coating processes. The resulting electrical conductivity (powder measurement) is typically >0.01 S/cm, preferably >0.1 S/cm and thus suitable for application in most electrodes.

For the preparation of mixed Ir/Ru oxide catalysts, the above-cited process is modified and suitable Ir and Ru precursor compounds are jointly added to the suspension of the inorganic oxide in water. Suitable Ru-compounds are RuCl₃-Hydrate, Ru(III)-nitroysl-nitrate, Ru(III)-acetate and the like.

The heat treatment of the catalyst materials is performed in suitable batch, tube or belt furnaces under air, reducing or inert atmospheres. Typical calcination temperatures are in the range of 300 to 800°C, preferably in the range of 300 to 500°C. Typical calcination times are 30 to 120 minutes.

In the manufacturing process described above, the iridium oxide particles are precipitated in very fine, nano-sized form (i.e. highly dispersed) on or at the surface of the inorganic oxide.

As the surface area of the inorganic oxide is sufficiently high and stable during thermal treatment, the dispersion of the precious metal oxide particles also remains stable during the subsequent thermal treatment process. Sintering of the particles is prohibited. This results in a high BET surface area of the final catalyst, which in turn leads to high activity and stability. Optimum electrochemical performance results are obtained when the BET surface area of the final iridium oxide catalyst is in the range of 20 to 150 m²/g, preferably in the range of 40 to 120 m²/g. If the inorganic oxide is omitted, coarse, agglomerated particles with a low surface area are obtained, resulting in a poor electrochemical activity.

For manufacture of electrodes, catalyst-coated membranes (CCMs) and membrane-electrode-assemblies (MEAs), the iridium oxide catalysts are processed into inks or pastes by adding suitable solvents and optionally ionomer materials. The catalyst inks may be deposited onto gas diffusion layers (GDLs), current collectors, ionomer membranes, blank PTFE sheets, release papers or separator plates and the like by spraying, printing, doctor-blading or other deposition processes. Usually, a drying process is subsequently applied to remove the solvents of the catalyst ink. In catalyst-coated membranes and MEAs for PEM water electrolysers, the claimed catalyst materials are applied to the anode side of the MEA. The typical loading is in the range of 0.2 to 2.5 mg precious metal/cm². On the cathode side, standard Pt catalysts (e.g. Pt/C or Pt-Black) are used. The cathode loadings are in the range of 0.1 to 1 mg Pt/cm².

### Electrochemical measurement

The electrochemical properties of the catalyst materials are determined by the current density (in mA/cm²) at 1.5 V vs. RHE (in mA/mg; RHE = reversible hydrogen electrode). In these tests, the catalyst samples are dispersed in ultra purified water and fixed on a glassy carbon electrode. Cyclic voltammograms are taken in perchloric acid (c= 0.1 mol/l) at room temperature. Counter electrode is Pt, reference electrode is Hg/Hg₂SO₄ (Radiometer); scan speed is 20 mV/s. After 40 cycles of conditioning, the third scan of voltammograms is taken to generate quasi-stationary conditions. The electrochemical activity is determined by the parameter of the current at a constant voltage of 1.5 V vs. RHE

### Measurement of electrical conductivity

The electric conductivity of the samples is determined using the Powder Resistivity Measurement System (Type Loresta) from Mitsubishi Chemical (Japan) with a 4-pin probe (3.0 mm electrode distance, 0.7 mm electrode radius). After filling the powder sample in the container (sample radius 10.0 mm, sample weight between 0.7 and 5.9 g), the pressure is increased from 0 MPa up to a pressure of 38 MPa during measurement.

The invention is illustrated but not limited by the following examples and the comparative examples.

### Example 1

Preparation of IrO₂/TiO₂ (54 wt.-% TiO₂, 46 wt.-% IrO₂) 21.24 g (dry mass) of titanium dioxide (P25, Evonik Degussa GmbH; BET 50 m²/g) are added to a 10 L beaker containing 5.5 L of deionized water under vigorous stirring. Next, 74.46 grams of a hexachloroiridium acid solution (H₂IrCl₆, 20.5 wt.-% Ir; Umicore, Hanau/Germany) are diluted with 200 mL of deionized water and added to the suspension under stirring. The suspension is then heated to 70°C. After reaching the temperature, 220 ml of NaOH solution (80 g NaOH in 500 mL deionized water) are added and diluted further with deionized water to a total volume of 8 L.

The temperature is kept at the same level for about 4 hours. The final pH of 7.5 is adjusted using 20 wt.-% HCl and the slurry is stirred for another hour at 70°C. Finally the product is isolated by filtration and washed with 0.5% acetic acid and deionized water. The catalyst is dried in an oven overnight. The product is then calcined at 400°C in a tubular oven in air. **Table 1** summarizes the characteristic data of the catalyst.

### Example 2

Preparation of IrO₂/Al₂O₃ (54 wt.-% Al₂O₃, 46 wt.-% IrO₂) 21.24 g (dry mass) of alumina (Puralox SCFa-140, Sasol Germany GmbH, Brunsbuettel; BET = 141 m²/g) are added to a 10 L beaker containing 5.5 L of deionized water under vigorous stirring. Next, 74.46 g of a hexachloroiridium acid solution (H₂IrCl₆, 20.5 wt.-% Ir; Umicore, Hanau/Germany) are diluted with 200 mL of deionized water and added to the suspension under stirring. The suspension is then heated to 70°C. After reaching the temperature, 288 ml of NaOH-solution (80 g NaOH in 500 mL DI water) are added and diluted further with deionized water to a total volume of 8 L.

The temperature is kept at the same level for about 4 hours. The final pH of 7.5 is adjusted using 20 wt.-% HCl and the slurry is stirred for another hour at 70°C. Finally the product is isolated by filtration and washed with 0.5% acetic acid and deionized water. The catalyst is dried in an oven overnight. The product is then calcined at 400°C in a tubular oven in air. **Table 1** summarizes the characteristic data of the catalyst.

### Example 3

Preparation of IrO₂/Al₂O₃ (42 wt.-% Al₂O₃, 58 wt.-% IrO₂) 21.24 g (dry mass) of alumina (Puralox SCFa-140, Sasol Germany GmbH, Brunsbuettel; BET = 141 m²/g) are added to a 10 L beaker containing 5.5 L of deionized water under vigorous stirring. Next, 124.1 g of a hexachloroiridium acid solution (H₂IrCl₆, 20.5 wt.-% Ir; Umicore, Hanau/Germany) are diluted with 200 mL of deionized water and added to the suspension under stirring. The suspension is then heated to 70°C. After reaching the temperature, 288 ml of NaOH-solution (80 g NaOH in 500 mL deionized water) are added and diluted further with deionized water to a total volume of 8 L.

The temperature is kept at the same level for about 4 hours. The final pH of 7.5 is adjusted using 20 wt:-% HCl and the slurry is stirred for another hour at 70°C. Finally the product is isolated by filtration and washed with 0.5% acetic acid and deionized water. The catalyst is dried in an oven overnight. The product is then calcined at 400°C in a tubular oven in air. **Table 1** summarizes the characteristic data of the catalyst.

### Comparative Example 1 (CE1)

Preparation of IrO₂/TiO₂ (78 wt.-% TiO₂, 22 wt.-% IrO₂) 21.24 g (dry mass) of titanium dioxide (P25, Evonik Industries AG; BET 50 m²/g) are added to a 10 L beaker containing 5.5 L of deionized water under vigorous stirring. Next, 24.82 g of a hexachloroiridium acid solution (H₂IrCl₆, 20.5 wt.-% Ir; Umicore, Hanau/Germany) are diluted with 200 mL of deionized water and added to the suspension under stirring. The suspension is then heated to 70°C. After reaching the temperature, 53 ml of NaOH-solution (80 g NaOH in 500 mL deionized water) are added and diluted further with deionized water to a total volume of 8 L.

The temperature is kept at the same level for about 4 hours. The final pH of 7.5 is adjusted using 20 wt.-% HCl and the slurry is stirred for another hour at 70°C. Finally the product is isolated by filtration and washed with 0.5% acetic acid and deionized water. The catalyst is dried in an oven overnight. The product is then calcined at 400 °C in a tubular oven in air. **Table 1** summarizes the characteristic data of the catalyst.

### Comparative Example 2 (CE2)

Preparation of IrO₂/TiO₂ (11 wt.-% TiO₂, 89 wt.-% IrO₂; according to EP1701790B1) The sample is prepared according to the procedure described in EP 1701790B1 using titanium dioxide (Hombifine N, Sachtleben Chemie GmbH; BET >300 m²/g) and hexachloroiridium acid solution (H₂IrCl₆, 20.50 wt.-% Ir; Umicore, Hanau/Germany). The catalyst is isolated by filtration, washed and dried. The product is then calcined at 400°C in a tubular oven in air. **Table 1** summarizes the characteristic data of the catalyst.

**Table 1: Characteristic data of water electrolysis catalysts**

| Parameter | Example 1 | Example 2 | Example 3 | Comp. Ex. | Comp. Ex. |
|---|---|---|---|---|---|
| | | | | CE1 | CE2 |
| Catalyst BET [m²/g] | 45 | 112 | 100 | 46 | 31 |
| Inorganic oxide | titania | alumina | alumina | titania | titania |
| BET [m²/g] | 50 | 141 | 141 | 50 | > 300 |
| wt.-% | 54 | 54 | 42 | 78 | 11 |
| Current density at | | | | | |
| 1.5 V vs. RHE | 8.69 | 13.3 | 20.64 | 0.47 | 7.89 |
| [mA/mg] | | | | | |
| Electric conductivity | 5.24 | 0.11 | 10.2 | 1.26 10⁻⁶ | 78.9 |
| [S/cm] | | | | | |

The data in **Table 1** clearly demonstrate that the amount of inorganic oxide can be increased from 25 wt.-% up to 54 wt.-% without significant loss in electrical conductivity and without losing the superior characteristics of the catalysts in water electrolysis. As can be seen, the current density at 1.5 V vs. RHE (in mA/mg) of the water electrolysis catalysts according to the present invention is even higher compared to the catalyst of Comparative Example 2 (prepared according to EP 1701790B 1). This finding is surprising due to the significantly higher content of IrO₂ and lower content of inorganic oxide.

In more detail, the prior art catalyst of CE2 contains 89 wt.-% of IrO₂, while the inventive catalysts of the examples contain 46 wt.-% IrO₂ (ref to Example 1 and 2) or 58 wt.-% IrO₂ (ref to Example 3). Thus, when using the catalysts of the present invention in water electrolyzers or other applications, a considerable reduction of precious metal consumption is archived without loss of electrochemical performance.

## Claims

1. Catalyst for water electrolysis, comprising iridium oxide and a high surface area inorganic oxide, having a BET surface area in the range of 30 to 200 m²/g, wherein the inorganic oxide is present in a quantity in the range of 25 to 70 wt.-% based on the total weight of the catalyst and wherein the electrical conductivity of the catalyst (as detected by powder measurements) is >0.01 S/cm.

2. Catalyst according to claim 1, further comprising ruthenium oxide in an amount resulting in an Ir / Ru - atomic ratio in the range of 4/1 to 1/4.

3. Catalyst according to claim 1 or 2, wherein the inorganic oxide is selected from the group of titania (TiO₂), silica (SiO₂), alumina (Al₂O₃), zirconia (ZrO₂), tin dioxide (SnO₂), F-doped tin oxide (SnO₂/F), ceria (CeO₂), ceria doped zirconia (CeO₂/ZrO₂), niobium pentoxide (Nb₂O₅), tantalum pentoxide (Ta₂O₅ ) and mixtures and combinations thereof.

4. Catalyst according to any one of claims 1 to 3, wherein the iridium oxide comprises iridium(IV)-oxide, iridium(III)-oxide and/or mixtures thereof.

5. Catalyst according to any one of claims 1 to 4, wherein the inorganic oxide is added in a range of 30 wt.-% to 60 wt.-%, based on the total weight of the catalyst.

6. Catalyst according to any one of claims 1 to 5, wherein the electrical conductivity of the catalyst is >0.1 S/cm.

7. Catalyst according to any one of claims 1 to 6, wherein the inorganic oxide, has a BET surface area in the range of 30 to 150 m²/g.

8. Catalyst according to any one of claims 1 to 6, wherein the BET surface area is in the range of 20 to 150 m²/g, preferably in the range of 40 to 120 m²/g.

9. Process for manufacture of the catalyst according to any one of the claims 1 to 8, comprising the steps:
dissolving an iridium and optionally the ruthenium precursor compound in the presence of an inorganic oxide having a BET surface area in the range of 30 to 200 m²/g,in an aqueous solution and
precipitating the iridium oxide (optionally in combination with the ruthenium oxide) by adjusting the pH of the mixture in the range of 6 to 10,
separating and drying the catalyst, and
heat treating the catalyst at temperatures in the range of 300 to 800 °C.

10. Process according to claim 9, wherein the iridium precursor compound is selected from the group of hexachloroiridium(IV) acid, Ir(III)-chloride or Ir-nitrate

11. Process according to claim 9, wherein the ruthenium precursor compound is selected from the group of RuCl₃-hydrate, Ru(III)-nitrosyl nitrate or Ru(III)-acetate.

12. Use of the catalyst according to any one of the claims 1 to 9 as anode catalysts in electrodes, catalyst-coated membranes (CCMs) and membrane-electrode-assemblies (MEAs) for PEM water electrolysers.

13. Use of the catalyst according to any one of the claims 1 to 9 in regenerative fuel cells (RFC), sensors, electrolysers and other electrochemical devices.

14. Use of the catalyst according to any one of the claims 1 to 9 in PEM fuel cells for improvement of start-up/shut-down characteristics.
